**Europäisches Patentamt**

(19) **European Patent Office**

**Office européen des brevets**

(11) Veröffentlichungsnummer: **0 009 761**
**B2**

(12) **NEUE EUROPÄISCHE PATENTSCHRIFT**

(45) Veröffentlichungstag der neuen Patentschrift:
13.01.88

(21) Anmeldenummer: 79103646.0

(22) Anmeldetag: 26.09.79

(51) Int. Cl.⁴: **C 08 L 67/06,** C 08 G 63/54,
C 08 G 63/66, C 08 G 18/67,
C 08 G 18/08

(54) **Mischungen aus Polyurethanen und ungesättigten Polyesterharzen, Verfahren zu ihrer Herstellung und ihre Verwendung bei der Herstellung eingedickter Harzsysteme.**

(30) Priorität: 07.10.78 DE 2843822

(43) Veröffentlichungstag der Anmeldung:
16.04.80 Patentblatt 80/8

(45) Bekanntmachung des Hinweises auf die Patenterteilung:
18.04.84 Patentblatt 84/16

(45) Bekanntmachung des Hinweises auf die Entscheidung
über den Einspruch:
13.01.88 Patentblatt 88/2

(84) Benannte Vertragsstaaten:
AT DE FR GB IT NL

(56) Entgegenhaltungen:
JP-A-76 047 069
US-A-3 448 172
US-A-4 035 439

CHEMICAL ABSTRACTS, BAND 25, NR. 18,
veröffentlicht am 1. November 1976,
Zusammenfassung Nr. 125133g, Seite 55, Columbus,
Ohio, USA

Die Akte enthält technische Angaben, die nach
dem Eingang der Anmeldung eingereicht wurden
und die nicht in dieser Patentschrift enthalten sind.

(73) Patentinhaber: BAYER AG, Konzernverwaltung RP
Patentabteilung, D-5090 Leverkusen 1 Bayerwerk
(DE)

(72) Erfinder: Hess, Bernhard, Dr., Kaldenhausener
Strasse 84, D-4130 Moers 2 (DE)
Erfinder: Schulz-Walz, Hansjochen, Dr., Am
Egelsberg 30, D-4150 Krefeld (DE)
Erfinder: Von Harpe, Hannes, Dr., Breslauer
Strasse 31, D-4150 Krefeld (DE)
Erfinder: Peltzer, Bernd, Dr., Scheiblerstrasse 99,
D-4150 Krefeld (DE)
Erfinder: Bottenbruch, Ludwig, Dr.,
Woehlerstrasse 5, D-4150 Krefeld (DE)

EP 0 009 761 B2

## Beschreibung

Mischungen aus Polyurethan und ungesättigten Polyesterharzen, Vefrahren zu ihrer Herstellung und ihre Verwendung bei der Herstellung eingedickter Harzsysteme

Die vorliegende Erfindung betrifft Mischungen aus $\alpha,\beta$-ethylenisch ungesättigten Polyestern, damit copolymerisierbaren Vinyl- oder Vinylidenverbindungen und Polyurethanen mit Carboxylgruppen und mindestens einer endständigen polymerisierbaren Doppelbindung pro Molekül, aus denen gehärtete Formteile mit verbesserten mechanischen Eigenschaften hergestellt werden können.

Aus der japanischen Auslegeschrift 19.696/72 sind Mischungen bekannt, die einen $\alpha,\beta$-ethylenisch ungesättigten Polyester, Vinylmonomere und ein Polyurethan enthalten, das keine freien Isocyanatgruppen aufweist. Diese Mischungen dienen dort zur Herstellung von Formmassen, die sich zu schwund- und verzugsarmen Formteilen mit glatter Oberfläche härten lassen. Die mechanischen Festigkeiten solcher Formteile (Biegefestigkeit und Biegesteifigkeit) sind laut Beschreibung im Vergleich zu jenen, die kein Polyurethan enthalten, nicht verbessert, eher geringfügig verschlechtert. Die Formmassen werden dort im Nasspressverfahren hergestellt.

Eine sehr rationale und weit verbreitete Verarbeitungsmethode für ungesättigte Polyesterharze ist die Harzmattentechnologie. Hier werden die Polyesterharze mit Füllstoffen, Polymerisationsinitiatoren, Hilfsmitteln und chemischen Verdickungsmitteln, wie z. B. Magnesiumoxid, vermischt, mit dieser Masse Glasfasermatten getränkt und die Matten beidseitig mit Abdeckfolien geschützt. Nach einer Reifezeit von 1-3 Tagen verfestigt sich durch die Reaktion des chemischen Verdickungsmittels mit dem ungesättigten Polyesterharz die Masse so, dass die Abdeckfolien ohne Beschädigung der Matte abgezogen werden können. Die klebfreie Harzmatte kann in dieser Form bequem zugeschnitten und in einer beheizten Presse zu Formteilen gehärtet werden.

Ein entscheidender Nachteil der aus handelsüblichen ungesättigten Polyesterharzen nach der Harzmattentechnologie oder anderen Verfahren hergestellten Formteile ist deren hohe Sprödigkeit, die ihre Verwendung auf verschiedenen Gebieten, wie z. B. im Fahrzeugbau, stark einschränkt.

Aus der Literatur sind Arbeiten bekannt, nach denen durch schwundmindernde kautschukelastische Zusätze zu ungesättigten Polyesterformmassen gleichzeitig eine graduelle Verbesserung der Schlagzähigkeit daraus hergestellter Formteile erreicht werden soll (s. z. B. DE-AS 1 166 467, 1 241 983; US-PS 3 668 178, 3 882 078, 3 857 812, 3 674 893). Dabei bereitet jedoch die mangelhafte Verträglichkeit der kautschukelastischen Komponente mit der Lösung des ungesättigten Polyesterharzes in Vinylmonomeren Schwierigkeiten, sei es bei der Handhabung des Polyesterharzes oder der durch Zusatz von Additiven daraus hergestellten Polyesterharzmasse, sei es beim Eindicken mit chemichen Verdickern, wobei Harzmatten mit klebriger Oberfläche erhalten werden, von denen die Abdeckfolien oftmals nur unter Beschädigung der Harzmatte abgezogen werden können, sei es im gehärteten Pressteil, das zwar einen verminderten Schwund, aber auch eine ungleichmässige Pigmentierung und Flecken bei nur geringfügig oder gar nicht verbesserter Schlagzähigkeit aufweist. Beim Kontakt solcher Pressteile mit Lösungsmitteln, z. B. beim Lackieren, können dann die kautschukelastischen Zusätze angequollen und herausgelöst werden, wodurch die sonst übliche günstige Chemikalienbeständigkeit der gehärteten ungesättigten Polyesterharzmassen verlorengeht.

Wie aus Chem. Abstracts 85, 125 133g (1976) hervorgeht, waren Mischungen aus ungesättigten Polyesterharzen und sauren Polyurethanen bekannt. Dass die Polyurethane polymerisierbare Doppelbindungen - und diese noch endständig - enthalten sollten, lässt sich dem Referat nicht entnehmen.

Die US-PS 3 448 172 betrifft Zusammensetzungen aus ungesättigten Polyesterharzen und urethangruppenhaltigen Reaktionsprodukten aus einem isocyanatgruppenhaltigen Präpolymeren, einer ungesättigten Verbindung mit Hydroxylendgruppen und einem Kettenverlängerungsmittel. Dieses Reaktionsprodukt enthält offensichtlich endständige Doppelbindungen, aber keine Carboxylgruppen entsprechend einer Säurezahl von mindestens 8.

Das Anliegen der zwei letztgenannten Literaturstellen war ein möglichst geringer Polymerisationsschwund. Selbst bei Kenntnis beider Veröffentlichungen war für den Fachmann nicht ersichtlich, wie er das Problem des mit der Erdalkalioxid- bzw. -hydroxid-Eindickung verbundenen starken Abfalls der Wärmestandfestigkeit und der Schlagzähigkeit lösen könnte, d. h. es war nicht vorherzusehen, dass bei unseren erfindungsgemässen Proben die Schlagzähigkeit sowohl absolut höher als bei den Vergleichsproben liegt als auch dass sie durch die Magnesiumoxid- bzw. -hydroxid-Eindickung weit weniger als bei den Vergleichsproben beeinträchtigt wird, während die Wärmestandfestigkeit durch die erfindungsgemässe Modifizierung nahezu unberührt bleibt (vgl. unsere Tabelle II).

Eine Kombination der beiden Literaturstellen lag aber schon deshalb nicht nahe, weil in der US-PS 3 448 172 eine Eindickung durch Metalloxide bzw. Hydroxide gar nicht erwähnt wird.

Es besteht somit ein Bedarf an ungesättigten Polyesterharzen, die in Vinyl- oder Vinylidenmonomerenlösung nach Möglichkeit einphasig sind, sich im Bedarfsfall mit chemischen Verdickern ohne Entmischung eindicken lassen und im gehärteten Zustand schlagzähe Pressteile ohne wesentliche Beeinträchtigung der Wärmestandfestigkeit liefern.

Überraschenderweise wurde gefunden, dass ungesättigte Polyesterharze, die Zusätze von Polyurethanen mit durch Einsatz von Carboxylgruppen enthaltenden Polyolen erhaltenen Carboxylgruppen und mindestens einer endstandigen radikalisch polymersierbaren Doppelbindung pro Molekül enthalten, die genannten anforderungen erfüllen und Pressteile mit hervorragenden Eigenschaften liefern.

**0 009 761**

Gegenstand der Erfindung sind also Mischungen aus

a) 20-70 Gewichtsteilen mindestens eines $\alpha,\beta$-ethylenisch ungesättigten Polyesters mit mindestens drei Doppelbindungen pro Molekül,

b) 20-70 Gewichtsteilen mindestens einer mit a) copolymerisierbaren Vinyl- oder Vinylidenverbindung und

c) 3-30 Gewichtsteilen mindestens eines Polyurethans,

das mindestens eine endständige radikalisch polymerisiobare Doppelbindung pro Molekül und Carboxylgruppen entsprechend einer Säurezahl von mindestens 8 (bezogen auf Polyurethan C) enthält,

dadurch gekannzeichnet, daß die Carboxylgruppen durch Einsatz von Carboxylgruppen enthaltenden Polyolen erhalten worden sind.

Ein weiterer Gegenstand der Erfindung ist ein Verfahren zur Herstellung dieser Mischungen durch Mischen der Komponenten sowie die Verwendung dieser Mischungen zur Herstellung von eingedickten Harzsystemen.

Zur Klarstellung der Erfindung werden nachstehend einige Begriffe definiert, wie sie in der vorliegenden Anmeldung verstanden werden sollen:

≺Ungesättigte Polyester A≻ sind urethangruppenfreie Verbindungen;

≺Doppelbindungen pro Molekül≻ bedeutet den Quotienten aus der Anzahl analytisch feststellbarer Doppelbindungen und mittlerem Molekulargewicht (betr. Bestimmungsmethode: siehe unten);

unter ≺Polyurethan C≻ werden Polyurethane verstanden, die sowohl Ester- als auch Urethangruppen enthalten, wobei diese Polyurethane mindestens 0,01 Äquivalente Urethangruppen pro 100 g des Polyurethans enthalten;

≺endständig ungesättigt≻ oder ≺endständige radikalisch polymerisierbare Doppelbindung≻ bedeutet im Sinne der Erfindung, dass jeweils der erste Carbon- oder Dicarbonsäurerest, von den Enden der Polymerkette aus gezählt, eine polymerisierbare ethylenisch ungesättigte Doppelbindung enthält, während das restliche Molekül keine weitere ethylenisch ungesättigte (polymerisierbare) Doppelbindung mehr besitzt.

Die zu verwendenden ungesättigten Polyester A können nach bekannten Verfahren durch Polykondensation mindestens einer $\alpha,\beta$-ethylenich ungesättigten Dicarbonsäure mit 4-6 C-Atomen (oder deren esterbildenden Derivaten), gegebenenfalls in Abmischung mit einer oder mehreren Dicarbonsäuren mit 4-20 C-Atomen, die keine ungesättigten aliphatischen Gruppen enthalten (oder deren esterbildenden Derivaten) mit mindestens einem zweiwertigen Alkohol mit 2-30 C-Atomen hergestellt werden. Bevodugt zu verwendende ungesättigte Dicarbonsäuren, die keine ungesättigte aliphatischen Gruppen enthalten, oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäre bzw. Bernsteinsäureanhydrid und Bernsteinsäureester und -chloride, Glutarsäure, Adipinsäure, Sebacinsäure, Trimellithsäure. Um schwerentflammbare Harze herzustellen, können z. B. Hexachlorendomethylentetrahydrophthalsäure, Tetrachlorphthalsäure oder Tetrabromphthalsäure verwendet werden. Flammwidrigkeit kann auch erreicht werden durch Zusatz von halogenhaltigen, nicht im Polyester einkondensierten Verbindungen, wie beispielsweise Chlorparaffin. Bevorzugt zu verwendende Polyester enthalten Maleinsäurereste, die bis zu 50 Mol-%, durch Phthalsäure- oder Isophthalsäurereste ersetzt sein können. Bevorzugte zweiwertige Alkohole sind Ethylenglykol, Propandiol-1,2, Propandiol-1,3, Diethylenglykol, Dipropylenglykol, Butandiol-1,3, Butandiol-1,4, Neopentylglykol, 2-Ethylpropandiol-1,3, Hexandiol-1,6, Perhydrobisphenol, oxalkylierte Bis-phenole u. a. Die Säurezahl der Polyester kann zwischen 1 und 100, die OH-Zahlen zwischen 10 und etwa 150 und die rechnerischen Molekulargewichte zwischen etwa 500 und 10000, vorzugsweise zwischen etwa 700 und 3000 (berechnet nach Säure- und OH-Zahl) liegen.

Als bevodugte copolymerisierbare Vinyl- und Vinylidenverbindungen B im Sinne der Erfindung eignen sich in der Polyestertechnologie gebräuchliche ungesättigte Verbindungen, die bevorzugt $\alpha$-substituierte Vinylgruppen oder $\beta$-substituierte Allylgruppen tragen, insbesondere Styrol, aber auch beispielsweise kernchlorierte und -alkylierte bzw. -alkenylierte Styrole, wobei die Alkylgruppen 1-4 Kohlenstoffatome enthalten können, wie z. B. Vinyltoluol, Divinylbenzol, $\alpha$-Methylstyrol, tert.-Butylstyrole, Chlorstyrole; Vinylester von Carbonsäuren mit 2-6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkomponente, -halb- und -diamide oder cyclische Imide wie N-Methylmaleinimid oder N-Cyclohexylmaleinimid, Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphate und Triallylcyanurate.

Die Herstellung der Polyurethane C kann so erfolgen, dass ein NCO-gruppenterminiertes Carboxylgruppen enthaltendes Polyurethan, dessen Endgruppen mit einer radikalisch polymerisierbaren Verbindung, die noch mindestens einen mit Isocyanat reaktionsfähigen Wasserstoff besitzt, umgesetzt wird oder durch nachträgliche Aufsäuerung des NCO-gruppenfreien Polyurethans, z. B. mit einem Dicarbonsäureanhydrid.

Die für die Herstellung der Polyurethane C zu verwendenden carboxylgruppenhaltigen NCO-terminierten Polyurethan können mittlere Molekulargewichte 2 000 - 1 000 000, vorzugsweise 10 000 bis 500 000, aufweisen, bestimmt nach der Methode der Membranosmose. Die Herstellung kann in bekannter Weise durch Umsetzung einer Polyhydroxyverbindung mit einem Molekulargewicht über 600, gegebenenfalls einer Verbindung mit zwei reaktionsfähigen Wasserstoffatomen und einem Molekulargewicht unter 600, und einem Polyisocyanat erfolgen. Bevorzugte Polyhydroxylverbindungen mit einem Molekulargewicht über 600 sind neben Polyesteramiden oder Polyacetaten insbesondere lineare oder vorwiegend lineare Polyester, wie sie

3

beispielsweise durch thermische Kondensation aus Ethylenglykol, Propandiol-1,2, Propandiol-1,3, Diethylenglykol, Dipropylenglykol, Butandiol-1,3, Butandiol-1,4, Neopentylglykol, 2-Ethylpropandiol-1,3, Pentandiol-1,5, Hexandiol-1,6, 2,2-Bis-(hydroxymethyl)-propionsäure und Bernsteinsäure, Adipinsäure, Pimelinsäure, Korksäure, Azelainsäure, Sebacinsäure oder Phthalsäure hergestellt werden können. Ausser derartigen Polyestern eignen sich auch Hydroxylpolycarbonate, insbesondere solche aus Hexandiol-1,5 und Diarylcarbonaten sowie Veresterungsprodukte geradkettiger Hydroxylalkanmonocarbonsäuren mit mindestens 5 Kohlenstoffatomen bzw. die entsprechenden Lactonpolymerisate oder Rizinusöl. Die Polyester werden unter solchen Bedingungen hergestellt, dass ihre Endgruppen zumindest zum überwiegenden Teil aus Hydroxylgruppen bestehen. Ausserdem eignen sich auch Polyether, wie Propylenoxid- oder Tetrahydrofuranpolymerisate oder Polythioether, wie Kondensationsprodukte des Thiodiglykols mit sich selbst oder anderen Diolen. Diese Produkte besitzen im allgemeinen ein mittleres Molekulargewicht von etwa 600 bis 5000, vorzugsweise von 1000 bis 2500. An Verbindungen mit mindestens zwei mit Isocyanaten reaktionsfähigen Wasserstoffatomen und einem Molekulargewicht unter 600 (Kettenverlängerer) seien neben Wasser oder einfachen Glykolen, wie z. B. Ethylenglykol, Propandiol-1,3, Butandiol-1,4, Pentandiol-1,5 oder Hexandiol-1,6, auch Glykole mit Harnstoff-, Urethan-, Carbonamid- oder Estergruppen sowie solche mit tertiären Stickstoffatomen genannt. Auch auf die Möglichkeit der Verwendung von Glykolen mit aromatischen Ringsystemen, beispielsweise 1,5-Napthylen-3-dioxethylether oder Hydrochinon-β-dioxethylether, sei hingewiesen. Weiterhin sind auch Diamine, wie o-Dichlorbenzidin, 2,5-Dichlor-p-phenylendiamin oder 3,3′-Dichlor-4,4′-diaminodiphenylmethan, ebenso geeignet wie z. B. Hydrazin, Aminoalkohole, wie z. B. N-Allylethanolamin, Amino- oder Oxycarbonsäuren wie 2,2-Bis-(hydroxymethyl)propionsäure.

Bevorzugte Polyisocyanate sind aliphatische, cycloaliphafische, araliphatische oder aromatische Diisocyanate mit 4-30 C-Atomen, wie z. B. 1,4-Butandiisocyanat, 1,6-Hexandiisocyanat, 1,4-Cyclohexandiisocyanat, 1-Methyl-2,4-diisocyanatocyclohexan, 1-Methyl-2,6-diisocyanatocyclohexan, 1-Isocyanato-3-isocyanatomethyl-3,5,5-trimethylcyclohexan, 2,4- bzw. 2,6-Diisocyanatotoluol, 4,4′-Diphenylmethandiisocyanat, 4,4′-Diphenylpropandiisocyanat, p-Phenylendiisocyanat, 1,5-Napthylendiisocyanat bzw. Gemische derartiger Diisocyanate. Besonders bevorzugt sind 4,4′-Di-phenylmethandiisocyanat, 2,4- bzw. 2,6-Diisocyanatotoluol sowie deren Gemische.

Die Einführung der Carboxylgruppen kann in bekannter Weise erfolgen, indem die Polyhydroxylverbindungen mit einem Molekulargewicht über 600 mit weniger als der sich auf die Endgruppen berechnenden Menge eines Diisocyanats umgesetzt, die Verbindung mit zwei reaktionsfähigen Wasserstoffatomen und einem Molekulargewicht unter 600 zugemischt und die Reaktion mit einer weiteren Diisocyanatzugabe zu Ende geführt werden. Man kann auch so verfahren, dass man die Polyhydroxylverbindungen mit einem Überschuss an Diisocyanaten über die zur Reaktion mit den Endgruppen erforderliche Menge umsetzt und die Menge der Verbindung mit einem Molekulargewicht unter 600 so bemisst, dass ein Überschuss über die sich auf die noch vorhandenen Isocyanatgruppen berechnende Menge vorliegt. Natürlich kann man auch das Gemisch der Polyhydroxylverbindung mit einem Molekulargewicht über 600 und der Verbindung mit einem Molekulargewicht unter 600 mit einem Unterschuss an Diisocyanaten umsetzen.

Der Einbau der Carboxylgruppen in die Polyurethane kann während deren Herstellung durch Einsatz von Carboxylgruppen enthaltenden Polyolen, auch solchen mit Molekulargewichten > 600, beim Umsatz mit Diisocyanaten erfolgen. Als besonders vorteilhaft hat sich der Einsatz von tertiären Carboxylgruppen enthaltenden Diolen gezeigt, da diese mit NCO-Gruppen nicht reagieren und somit die Menge an einbaubaren Carboxylgruppen berechnet werden kann, während andere Carboxylgruppen beim Umsatz mit Isocyanat z. T. reagieren.

Das Carboxylgruppen enthaltende Polyurethan C soll eine Säurezahl von mindestens 8 und höchstens 50 aufweisen.

Die Einführung der endständigen radikalisch polymerisierbaren Doppelbindung kann in der Weise erfolgen, dass NCO-gruppenterminierte Polyurethane mit radikalisch polymerisierbaren Verbindungen, die noch mindestens einen mit Isocyanat reaktionsfähigen Wasserstoff besitzen, umgesetzt werden.

Solche radikalisch polymerisierbaren Verbindungen, die noch mindestens einen mit Isocyanat reaktionsfähigen Wasserstoff besitzen, sind z. B. Hydroxyalkylester der Acryl- oder Methacryl- oder Crotonsäure, wie z. B. Hydroxyethylacrylat oder -methacrylat, Hydroxypropylacrylat oder -methacrylat, Hydroxybutylacrylat oder -methacrylat, Hydroxylgruppen enthaltende niedermolekulare Ester der Malein-, Fumar-, Itacon-, Citraconsäure wie Bis-ethylen- oder -propylenglykolfumarat oder -maleinat, Allylalkohol oder Allyletheralkohole wie Dimethylolpropan-mono-allylether, Trimethylolpropan-mono- oder -diallylether usw.

Der Einsatz der Polyurethane C führt dazu, dass sie bei der Herstellung von Harzmatten mit chemischen Verdickungsmitteln, wie Magnesiumoxid, mit eingedickt und nach der Härtung infolge Copolymerisation nicht mehr herausgelöst werden können.

Die Polyurethane C können in der Schmelze oder als Lösung in B hergestellt werden und danach mit dem ungesättigten Polyester A oder dessen Lösung in B abgemischt werden. Diese Lösungen sind vorzugsweise klar oder haben nur eine schwache Trübung infolge von Strukturviskosität. Falls eine grössere störende Unverträglichkeit, z. B. zwischen zwei styrolischen Polyester- und Polyurethanlösungen auftritt, kann durch Angleichung der Veresterungskomponenten des ungesättigten Polyesters A und des Polyurethans C die Entmischung behoben werden: Enthält z. B. der ungesättigte Polyester A vorwiegend methylverzweigte Diole, so sollte das Polyurethanharz auch vorwiegend methylverzweigte Diole enthalten.

Um die erfindungsgemässen Mischungen vor unerwünschter vorzeitiger Polymerisation zu bewahren, werden den Komponenten A bzw. C spätestens beim Lösen in B 0,001-0,5 Gew.-Teile, bezogen auf 100 Gew.-Teile der Summe der Komponenten A-C, Polymerisationsinhibitoren oder Antioxydantien zugesetzt. Bevorzugte Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1-6 C-Atomen enthalten, Amine, vorzugsweise sekundäre Arylamine und ihre Derivate, Chinone, Kupfersalze organischer Säuren, Anlagerungsverbindungen von Kupfer-(I)halogeniden an Phosphite, wie z. B. 4,4'-Bis-(2,6-di-tert.-butylphenol), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxy-benzyl-phosphonsäurediethylester, N,N'-Bis-(β-naphthyl)-p-phenylendiamin, N,N'-Bis-(1-methylheptyl)-p-phenylendiamin, Phenyl-β-naphthylamin, 4,4'-Bis(α,α-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, Toluhydrochinon, p-tert.-Butylbrenzacetechin, Chloranil, Naphthochinon, Kupfernaphthenat, Kupferoctoat, Cu(I)Cl/Triphenylphosphit, Cu(I)Cl-Trimethylphosphit, Cu(I)Cl/Trichlorethylphosphit, Cu(I)Cl/Tripropylphosphit, p-Nitrosodimethylanilin. Weitere bevorzugte Stabilisatoren sind in <Methoden der organischen Chemie> (Houben-Weyl), 4. Auflage, Band XIV/1, S. 433-453, Georg Thieme Verlag, Stuttgart, 1961, beschrieben. Sehr gut geeignet ist z. B. Hydrochinon in einer Konzentration von 0,01-0,05 Gewichtsteile, bezogen auf 100 Gewichtsteile ungesättigtem Polyester A.

Zur Herstellung von Formmassen aus den erfindungsgemässen Mischungen können diesen die üblichen Polymerisationsinitiatoren in den üblichen Mengen, vorzugsweise 0,5-5 Gewichtsteile, bezogen auf 100 Gewichtsteile der Summe der Komponenten A, B und C, zugesetzt werden. Als solche eignen sich beispielsweise Diacylperoxide wie Diacetylperoxid, Dibenzoylperoxid, Di-p-chlorbenzoylperoxid, Peroxyester wie tert.-Butylperoxyacetat, tert.-Butylperoxybenzoat, tert.-Butylperoctoat, Dicyclohexylperoxydicarbonat oder 2,5-Dimethylhexan-2,5-diperoctoat, Alkylperoxide wie Bis-(tert.-butylperoxybutan), Dicumylperoxid, tert.-Butylcumylperoxid, Hydroperoxide wie Cumolhydroperoxid, tert.-Butylhydroperoxid, Cyclohexanonhydroperoxid, Methylethylketonhydroperoxid, Perketale, Ketonperoxide wie Acetylacetonperoxid oder Azoisobutyrodinitril.

Die Formmassen können als chemische Verdicker Oxide und/oder Hydroxide der Metalle der 2. Hauptgruppe des Periodensystems, bevorzugt des Magnesiums und Calciums in Mengen von 0,1-10, vorzugsweise von 1,0-4,0 Gewichtsteilen, bezogen auf 100 Gewichtsteile der Summe der Komponenten A, B und C, enthalten. Die genannten chemischen Verdicker können auch teilweise durch Zinkoxid ersetzt werden.

Ferner können die Formmassen 5-100, vorzugsweise 10-40 Gewichtsteile, bezogen auf 100 Gewichtsteile der Summe der Komponenten A, B und C, faserförmige Verstärkungsmaterialien enthalten. Als solche eignen sich anorganische Fasern wie Metall-, Asbest-, Kohlenstoff-, insbesondere Glasfasern und organische Fasern, z. B. Baumwolle-, Polyamid-, Polyester-, Polyacrylnitril oder Polycarbonatfasern.

Als organische Füllstoffe, die üblicherweise in Mengen von 50-500 Gewichtsteilen, bezogen auf 100 Gewichtsteile der Summe der Komponenten A, B und C, eingesetzt werden, kommen z. B. Kreide, Talkum, Quarz- und Schiefermehl, Kaolin, Kalkspat, Dolomit, Glimmer, Schwerspat, Kieselgur und Tonerde in Betracht.

Übliche Zuschlagstoffe, die mitverwendet werden können, sind z. B. organische und anorganische Pigmente, Farbstoffe, Gleit- und Trennmittel wie Zinkstearat, Thixotropiermittel, UV-Absorber, schwundmindernde Additive usw.

Die Herstellung der Formmassen in Form von Harzmatten kann am rationellsten in der Weise erfolgen, dass die erfindungsgemässen Mischungen A, B und C in Dissolvern oder auf Walzenstühlen mit den anderen Komponenten, ausgenommen die Verstärkungsfasern, intensiv gemischt werden und mit dieser Mischung flächig verlegte Verstärkungsfasern, auch in Form von Matten oder Geweben, getränkt werden. Die Oberflächen der so hergestellten Harzmatten können durch Abdeckfolien beidseitig geschützt werden. Die Folien verhindern das Abdunsten der Vinyl- bzw. Vinylidenverbindungen B und gestatten das Aufrollen der Matten und damit eine raumsparende Lagerung. Nach einer Eindickzeit von 1-2 Tagen Lagerung bei Raumtemperatur können die Abdeckfolien abgezogen und die Harzmatten nach entsprechendem Zuschnitt zu Formteilen bei ca. 120-160°C unter einem Druck von ca. 2-16 mPa in 0,5-5 Min. - je nach Grösse und Form - verpresst werden. Die Eindickzeit kann selbstverständlich auch durch Lagerung bei erhöhter Temperatur, z. B. 50°C, beschleunigt werden, falls dies erforderlich sein sollte.

Die Herstellung von Pressmassen, auch Sauerkrautpressmassen genannt, kann in ähnlicher Weise erfolgen. Nach der Herstellung einer möglichst fein dispergierten faserfreien Mischung der vorgenannten Art mit Hilfe von Dissolvern oder Walzenstühlen erfolgt deren Vermischung mit Fasern, meistens Glasfasern, in Knetern. Der Einfachheit halber wird oft auch die Vermischung sämtlicher Komponenten (einschliesslich der Faser) in Ketern vorgenommen. Die Pressmassen sind nach 1-2 Tagen Lagerung bei Raumtemperatur verpressbar.

Die erfindungsgemässen Mischungen sowie die daraus hergestellten Formmassen und Formteile zeichnen sich durch die folgenden Vorteile aus:

1. Die erfindungsgemässen Mischungen sind vorzugsweise klare Lösungen und somit unproblematisch bezüglich Lagerung und Verarbeitung.

2. Die erfindungsgemässen Mischungen besitzen niedrige Viskositäten, was Vorteile bei der Benetzung von Verstärkerfasern und Füllstoffen bietet und einen grossen Spielraum bei der Auswahl des Füllstoffanteils erlaubt.

3. Erfindungsgemässe Mischungen lassen sich mit chemischen Verdickungsmitteln ohne Entmischung eindicken und liefern trockene Harzmatten, die sich problemlos verarbeiten lassen.

4. Formteile auf Basis der erfindungsgemässen Mischungen zeigen eine verbesserte Biegefestigkeit und eine nahezu verdreifachte Schlagzähigkeit gegenüber den Grundharzen, und das überraschenderweise auch im eingedickten Zustand. Es findet praktisch kein Abfall der Schlagzähigkeit durch die Eindickung mit chemischen Verdickungsmitteln statt, was bei allen anderen Polyesterharzen der Fall ist.

5. Formteile auf Basis der erfindungsgemässen Mischungen zeichnen sich durch unvermindert gute Lösungsmittelbeständigkeit aus, da das Polyurethan chemisch eingebaut wird.

6. Formmassen auf Basis der erfindungsgemässen Mischungen zeichnen sich durch gute Wärmeformbeständigkeit aus, die durch das zugemischte Polyurethan kaum gemindert wird.

Die nachfolgenden Beispiele und Vergleichsbeispiele erläutern die Erfindung.

**Beispiele und Vergleichsbeispiele** Prozentangaben bedeuten Gewichtsprozent.
Herstellung der Komponente A, gelöst in B

Aus den nachfolgend aufgeführten Komponenten wird im Schmelzkondensationsverfahren unter Stickstoffatmosphäre ein ungesättigter Polyester hergestellt. Die Veresterung erfolgt bei 210°C bis zum Erreichen der angegebenen Kennzahlen; danach wird der Polyester bei ca. 120°C in Styrol gelöst. Die Lösung ist mit PE 1 bezeichnet:

| Polyester | PE 1 [g] |
|---|---|
| Maleinsäureanhydrid | 686 |
| Isophthalsäure | 498 |
| Propylenglykol-1,2 | 456 |
| Diethylenglykol | 477 |
| Hydrochinon | 0,42 |
| Kennzahlen der Lösung in Styrol: | |
| Styrolgehalt (%): | 39 |
| Viskosität bei 20°C (mPas): | 1100 |
| Säurezahl (mg KOH/g): | 18 |

Herstellung der Komponente C, gelöst in B

1. Herstellung eines Vorstufen-polyols (PEA)
Adipinsäure und Ethylenglykol werden im Molverhältnis 1 : 1,03 im Schmelzkondensationsverfahren bei 210° C unter Stickstoffatmosphäre bis zum Erreichen einer Säurezahl von 2 und einer OH-Zahl von 63 kondensiert. Der erhaltene Polyester (PEA) hat entsprechend der OH-Zahl ein berechnetes Molekulargewicht von 1775.

2. Herstellung von Polyurethanlösungen
Die in Tabelle I aufgeführten Mengen des Vorstufenpolyols PEA werden zusammen mit Dimethylolpropionsäure bei 120°C aufgeschmolzen und zu der Schmelze die angegebenen Mengen Toluylen-2,4-diisocyanat unter Stickstoff und Kühlung so zugetropft, dass die Temperatur der Schmelze 120°C nicht überschreitet. Nach dem Zutropfen wird noch 15 Min. bei 120°C nachgerührt und danach die Schmelze in der angegebenen Prozentigkeit in mit 0,01 % Benzochinon stabilisiertem Styrol gelöst. Die Lösungen werden auf 75°C abgekühlt, 0,03 % bezogen auf die Polyurethanlösungen, Zinndilaurat eingeführt, 3 Std. bei dieser Temperatur nachgerührt und danach die angegebenen Mengen Hydroxypropylmethacrylat zugegeben. Nach weiteren 3 Std. bei 75°C ist der NCO-Gehalt unter 0,01 % gesunken, und die Lösungen werden auf Raumtemperatur abgekühlt. Die erfindungsgemässen Lösungen sind mit PU 1 und 2, die dazugehörende Vergleichslösung mit einem zusätzlichen V gekennzeichnet. Ihre Kennzahlen sind ebenfalls in Tabelle I aufgeführt.

Herstellung der erfindungsgemässen Mischungen und Vergleichsmischungen

Die Abmischungen der in der Tabelle 11 aufgeführten Gewichtsmengen der Polyurethanlösungen PU 1 und 2 mit der Polyesterlösung PE 1 bei Raumtemperatur stellen die Beispiele und Vergleichsbeispiele dar. Zum Vergleich dient auch die polyurethanfreie Polyesterlösung PE 1.

In die erfindungsgemässen Mischungen werden jeweils 2 Gew.-% Benzoylperoxid, 50 %-ig in Dibutylphthalat, und 1,5 Gew.-% MgO eingerührt und die Massen zu 4 mm dicken Platten verarbeitet. Nach einer Reifezeit von 3 Tagen sind die Massen eingedickt; sie werden 3 Std. bei 80°C gehärtet und weitere 15 Std. bei 100°C getempert. Jeweils eine weitere Platte wird ohne MgO hergestellt. Die erhaltenen Platten dienen zur Herstellung von Normkleinstäben für die Messung der Schlagzähigkeit ($a_n$) und Wärmeformbeständigkeit nach Martens. Die entsprechenden Werte sind in der Tabelle II aufgeführt und zeigen deutlich den vorteilhaften Einfluss der erfindungsgemässen Polyurethanlösung auf die Eigenschaften des gehärteten Systems.

**Tabelle I**

| Polyurethanlösung | PU 1 | | PU 1 V | | PU 2 | |
|---|---|---|---|---|---|---|
| PEA G (Mol) | 1243 | (0,70) | 1509 | (0,85) | 750 | (0,65) |
| DMPS g (Mol) | 40,2 | (0,3) | 20 | (0,15) | 47 | (0,35) |
| TDJ g (Mol) | 182,7 | (1,05) | 182,7 | (1,05) | 182,7 | (1,05) |
| HPMA g (Mol) | 15 | (0,15) | 15 | (0,15) | 15 | (0,15) |
| Styrol % | 68 | | 68 | | 68 | |
| Sn-DL (%) | 0,03 | | 0,03 | | 0,03 | |
| | | | | | | |
| Kennzahlen: | | | | | | |
| Viskosität bei 20°C (mPas) | 1420 | | 670 | | 8000 | |
| Säurezahl der Lösung | 3,6 | | 1,6 | | 6 | |
| Säurezahl des Polyurethans | 12 | | 5 | | 19 | |

Abkürzungen:
PEA: Polyethylenglykoladipat
DMPS: Dimethylolpropionsäure = 2,2-Bis-(hydroxymethyl)-propionsäure
TDJ: Toluylen-2,4-diisocyanat
HPMA: Hydroxypropylmethacrylat
Sn-DL: Zinndilaurat

**Tabelle II**

| Beispiel | 1 | 1 V | 2 | 2 V |
|---|---|---|---|---|
| PU-Lösung | PU 1 | PU 1 V | PU 2 | - |
| PE 1: 62,3 g + | 37,7 g | 37,7 g | 37,7 g | - |
| PE 1: | - | - | - | 100g |
| Viskosität bei 20°C (mPas) | 710 | 450 | 780 | 1010 |
| ohne MgO: | | | | |
| $a_n$ (kJ/m²) | 17 | 17 | 16 | 7 |
| Martensgrad (°C) | 69 | 68 | 64 | 86 |
| mit 1,5 % MgO | | | | |
| $a_n$ (kJ/m²) | 13 | 6 | 15 | 5 |
| Martensgrad (°C) | 68 | 65 | 62 | 86 |

$a_n$ = Schlagzähigkeit

**Patentansprüche**

1. Mischungen aus
A) 20 - 70 Gewichtsteilen mindestens eines, $\alpha,\beta$-ethylenisch ungesättigten Polyesters mit mindestens drei Doppelbindungen pro Molekül,
B) 20 - 70 Gewichtsteilen mindestens einer mit A copolymerisierbaren Vinyl- oder Vinylidenverbindung und
C) 3 - 30 Gewichtsteilen mindestens eines Polyurethans, das mindestens eine endständige radikalisch polymerisierbare Doppelbindung pro Molekül und Carboxylgruppen entsprechend einer Säurezahl von mindestens 8 (bezogen auf Polyurethan C) enthält,
dadurch gekennzeichnet, daß die Carboxylgruppen durch Einsatz von Carboxylgruppen enthaltenden Polyolen erhalten worden sind.

2. Verfahren zur Herstellung von Mischungen nach Anspruch 1, dadurch gekennzeichnet, daß man
A) 20 - 70 Gewichtsteile mindestens eines $\alpha,\beta$-ethylenisch ungesättigten Polyesters mit mindestens drei Doppelbindungen pro Molekül,
B) 20 - 70 Gewichtsteile mindestens einer mit A copolymerisierbaren Vinyl- oder Vinylidenverbindung und
C) 3 - 30 Gewichtsteile mindestens eines Polyurethans, das mindestens eine endständige radikalisch polymerisierbare Doppelbindung pro Molekül und Carboxylgruppen entsprechend einer Säurezahl von mindestens 8 (bezogen auf Polyurethan C) enthält,

7

wobei die Carboxylgruppen durch Einsatz von Carboxylgruppen enthaltenden Polyolen erhalten worden sind, miteinander mischt.

3. Verwendung der Mischungen nach Anspruch 1 zur Herstellung von eingedickten Harzsystemen.

## Revendications

1. Mélanges de

A) 20 à 70 parties en poids d'au moins un polyester à non-saturation $\alpha,\beta$-éthylénique ayant au moins trois doubles liaisons par molécule,

B) 20 à 70 parties en poids d'au moins un composé de vinyle ou de vinylidène copolymérisable avec A et

C) 3 à 30 parties en poids d'au moins polyuréthanne, qui contient par molécule au moins une double liaison terminale susceptible de polymérisation radicalaire et les groupes carboxyle correspondant à un indice d'acide d'au moins 8 (relativement au polyuréthanne C),

caractérisés en ce que les groupes carboxyle ont été obtenus par l'utilisation de polyols contenant des groupes carboxyle.

2. Procédé de production de mélanges suivant la revendication 1, caractérisé en ce qu'on mélange ensemble

a) 20 à 70 parties en poids d'au moins un polyester à non-saturation $\alpha,\beta$-éthylénique ayant au moins deux doubles liaisons par molécule,

B) 20 à 70 parties en poids d'au moins un composé de vinyle ou de vinylidène copolymérisable avec A et

C) 3 à 30 parties en poids d'au moins un polyuréthanne qui contient par molécule au moins une double liaison terminale susceptible de polymérisation radicalaire et des groupes carboxyle correspondant à un indice d'acide d'au moins 8 (relativement au polyuréthanne C), les groupes carboxyle ayant été obtenus par l'utilisation de polyols contenant des groupes carboxyle.

3. Utilisation des mélanges suivant la revendication 1 pour la production de compositions épaissies de résines.

## Claims

1. Mixtures of

A) 20 - 70 parts by weight of at least one $\alpha,\beta$-ethylenically unsaturated polyester containing at least three double bonds per molecule,

B) 20 - 70 parts by weight of at least one vinyl or vinylidene compound which is copolymerisable with A and

C) 3 - 30 parts by weight of at least one polyurethane which contains at least one terminal radically polymerisable double bond per molecule and carboxyl groups corresponding to an acid number of at least 8 (based on polyurethane C), characterised in that the carboxyl groups have been obtained by using polyols containing carboxyl groups.

2. Process for the production of mixtures according to Claim 1, characterised in that

A) 20 - 70 parts by weight of at least one $\alpha,\beta$-ethylenically unsatured polyester containing at least three double bonds per molecule,

B) 20 - 70 parts by weight of at least one vinyl or vinylidene compound which is copolymerisable with A and

C) 3 - 30 parts by weight of at least one polyurethane which contains at least one terminal radically polymerisable double bond per molecule and carboxyl groups corresponding to an acid number of at least 8 (based on polyurethane C), the carboxyl groups having been obtained by the use of polyols containing carboxyl groups, are mixed together.

3. Use of the mixtures according to Claim 1 for the production of thickened resin systems.